# EUROPEAN PATENT APPLICATION

(11) **EP 4 837 776 A1**
(43) Date of publication of application: **11.11.2026**
(21) Application number: 25851889.3
(22) Date of filing: 29.07.2025
(51) Int. Cl.: B60L 53/30, B60L 53/80, B60L 53/60, H02J 7/00

(54) **BATTERY CHARGING DEVICE**

(30) Priority: 05.08.2024 KR 20240104160
(71) Applicant: LG Energy Solution, Ltd., Seoul 07335 (KR)
(72) Inventor: LIM, Geonhyeok, Daejeon 34122 (KR); KIM, Joohee, Daejeon 34122 (KR); PARK, Chanwoo, Daejeon 34122 (KR); PARK, Hyunyong, Daejeon 34122 (KR); CHOI, Jin Hyouk, Daejeon 34122 (KR); HONG, Sukmin, Daejeon 34122 (KR)
(74) Representative: BCKIP Part mbB
(86) International application number: PCT/KR2025/011289
(87) International publication number: WO 2026/034886

(57) **Abstract**

A battery charging device according to various embodiments may comprise: a case including an accommodation space into which a battery pack can be inserted; a door rotatably connected to one side of an open end of the accommodation space and configured to open or close the accommodation space; and a locking member disposed adjacent to the open end of the accommodation space and configured to maintain the door in a closed state or limit ejection of the battery pack inserted into the accommodation space on the basis of the degree of rotation. Other embodiments are possible.

## Description

### Technical Field

This application claims the benefit of Korean Patent Application No. 10-2024-0104160, filed on August 5, 2024, in the Korean Intellectual Property Office, the disclosure of which is incorporated herein by reference in its entirety.

The present disclosure relates to a battery charging device.

### Background Art

Unlike primary batteries, secondary batteries can be charged and discharged and thus be applied various fields such as digital cameras, mobile phones, laptops, hybrid vehicles, electric vehicles, and aircraft. Nickel-cadmium batteries, nickel-metal hydride batteries, and nickel-hydrogen batteries have been used as secondary batteries, and recently, lithium-ion batteries have been particularly in the spotlight.

Various environmental issues are emerging, and in response, rapid development of secondary battery technologies is accelerating. Accordingly, demand for hybrid vehicles and four-wheeled electric vehicles utilizing secondary batteries is gradually increasing, replacing internal combustion engine-based means of transportation. In line with this trend, in terms of two-wheeled vehicles used for a short distance, demand for two-wheeled electric vehicles, such as electric motorcycles and electric scooters powered mainly by electric motors, is also increasing, and a market for such vehicles is steadily expanding.

### Detailed Description of the Invention

### Technical Goals

Meanwhile, in the related art, for charging batteries (secondary batteries) of four-wheeled electric vehicles or two-wheeled electric vehicles, a method is employed in which a user moves to a separate charging facility to connect a plug-in type charging device to a vehicle in person for charging. However, in this case, there is an issue in that the user is required to wait for the vehicle without being able to use the vehicle until the charging of the battery is completed, which leads to a decrease in usability due to the inability to operate the vehicle.

Accordingly, a system has been proposed in which a battery pack is removed from a four-wheeled or two-wheeled electric vehicle, the used battery pack is inserted into a battery charging device for charging, and at the same time, a fully charged battery pack is provided and mounted on the vehicle for use.

In this manner, when the battery pack is removed from the electric vehicle and inserted into the battery charging device for charging, it is necessary to be provided with a locking device in the battery charging device to restrict arbitrary removal of the battery pack. In addition, after the battery pack is removed from the battery charging device, it is necessary to appropriately shield a slot by using a door to minimize introduction of moisture or foreign substances into the empty slot into which a battery pack may be inserted.

Various example embodiments of the present disclosure are proposed in consideration of the issues described above, providing a battery charging device capable of maintaining a door in a closed state or restricting removal of a battery pack based on a degree of rotation of a locking member provided inside the battery charging device.

### Technical solutions

A battery charging device according to various example embodiments of the present disclosure may include a case including an accommodation space, the accommodation space being configured to allow a battery pack to be inserted, the accommodation space having an open end, a door configured to be rotatably connected to a side of the open end of the accommodation space to open or close the accommodation space, and a locking member located adjacent to the open end of the accommodation space, the locking member being configured to maintain the door in a closed state or restrict removal of the battery pack that is inserted into the accommodation space based on a degree of rotation of the locking member.

For example, the battery charging device may further include a processor, at least one sensor configured to be electrically connected to the processor, the at least one sensor being configured to detect information on at least one of the locking member or the door, and an actuator configured to drive the locking member to rotate.

For example, the processor may be configured to acquire, by using the at least one sensor, sensing information on whether the door is opened or closed and whether the battery pack is inserted into or removed from the accommodation space and to control rotation of the locking member by the actuator based on at least a portion of the sensing information and user input information.

For example, the at least one sensor may include an optical sensor. The processor may be configured to determine, based on the sensing information, whether to charge the battery pack that is inserted into the accommodation space.

For example, the locking member may include a circular plate rotatably located at an outer side of the accommodation space and at least one wing part protruding from the circular plate in a radial direction of the circular plate. The at least one wing part may be located at an inner side of the accommodation space at least partially during rotation of the circular plate.

For example, the at least one wing part may be configured to push, based on a degree of the rotation of the circular plate, the door from the inner side to the outer side of the accommodation space.

For example, the at least one wing part may be configured to restrict, based on the degree of the rotation of the circular plate, rotation of the door such that the door maintains the closed state.

For example, the at least one wing part may be configured to block a removal path of the battery pack to restrict the removal of the battery pack that is accommodated in the accommodation space.

For example, the at least one wing part may include a curved surface corresponding to a shape of the battery pack.

For example, the door may be configured to rotate by the battery pack when the battery pack is inserted and may be positioned at an upper surface of the case.

For example, the case may further include a guide groove for guiding a moving direction of the door. The door may further include a protrusion part configured to be inserted into the guide groove. A sensor configured to detect position information of the battery pack or the door may be located in the guide groove.

For example, the circular plate may include a plurality of grooves spaced apart from one another. The battery charging device may further include at least one sensor configured to detect sensing information on at least one of the locking member or the door. The at least one sensor may be configured to detect the sensing information based on a position relationship with the plurality of grooves.

For example, the processor may be configured to identify whether the locking member malfunctions based on the sensing information and provide notification information when it is determined that the locking member malfunctions.

### Effects of the Invention

According to various example embodiments, a battery charging device capable of maintaining a door in a closed state or restricting removal of a battery pack based on a degree of rotation of a locking member provided inside the battery charging device by using minimum components may be provided.

Through this, a battery charging device with reduced manufacturing costs and a simplified structure may be provided.

### Brief Description of Drawings

FIG. 1 is a view illustrating a battery charging device 1 according to an example embodiment of the present disclosure.
FIG. 2A and FIG. 2B are views illustrating a process in which a battery pack 10 is inserted into a battery charging device 1 according to an example embodiment of the present disclosure.
FIG. 3 is a schematic cross-sectional view for describing a structure of a locking member 200 according to an example embodiment of the present disclosure.
FIG. 4 is a diagram illustrating a state in which a battery pack 10 is inserted into a battery charging device 1 according to an example embodiment of the present disclosure.
FIG. 5 is a view illustrating a state in which a battery pack 10 is completely inserted into a battery charging device 1 according to an example embodiment of the present disclosure.
FIG. 6A is a side view illustrating a state in which a battery pack 10 is removed from a battery charging device 1 according to an example embodiment of the present disclosure.
FIG. 6B is a perspective view partially illustrating the battery charging device 1 of FIG. 6A.
FIG. 7A is a side view illustrating a state in which door opening is restricted after a battery pack 10 is removed from a battery charging device 1 according to an example embodiment of the present disclosure.
FIG. 7B is a perspective view partially illustrating the battery charging device 1 of FIG. 7A.

### Mode for Carrying Out the Invention

Before the present disclosure is described in detail, it is to be understood that terms or words used in the present disclosure and the accompanying claims may not be limited to general definitions or dictionary definitions. Also, the terms and words may be construed under a principle that an inventor may appropriately define a concept of a term in order to describe their invention in the best way. Example embodiments described in the present disclosure and configurations illustrated in the accompanying drawings are merely the most desirable example embodiments, and may not represent all of the technical spirit of the present disclosure. Thus, various equivalents and modifications that may replace the example embodiments and configurations may be present at the time of filing the application of the present disclosure.

The same reference numerals or symbols used in the accompanying drawings denote components that perform substantially the same function. For purposes of ease of description and understanding, the same reference numerals or symbols may be used to describe different example embodiments. That is, although components having the same reference numerals are illustrated in multiple drawings, such drawings do not necessarily represent the same example embodiment.

In the following description, singular forms are intended to include plural forms as well, unless the context clearly indicates otherwise. It should be understood that terms such as 'include' or 'comprise' are intended to specify the presence of features, integers, steps, operations, components, parts or combinations thereof stated in this specification, but do not preclude the presence or addition of one or more other features, integers, steps, operations, components, parts or combinations thereof.

In addition, in the following description, terms such as upper, top, lower, bottom, side, front, and rear are used based on orientations illustrated in the drawings, and it is to be understood that such terms may vary depending on changes in the orientation of a corresponding target.

In the present specification and claims, terms including ordinal numbers such as "first", "second", and the like may be used to distinguish between components. Such ordinal numbers are used merely to differentiate one component from another component, and should not be construed as limiting the meanings of terms. For example, components referred to with such ordinal numbers should not be construed as being limited to the order of use or arrangement indicated by the numbers. If necessary, the ordinal numbers may be replaced with one another.

Hereinafter, example embodiments of the present disclosure will be described with reference to the accompanying drawings. However, the spirit of the present disclosure is not limited to the example embodiments. For example, a person skilled in the art who understands the spirit of the present disclosure may propose other example embodiments within the scope of the disclosure by adding, modifying, or removing components, and such example embodiments should also be regarded as falling within the scope of the present disclosure. The shapes and sizes of elements illustrated in the drawings may be exaggerated for clarity of explanation.

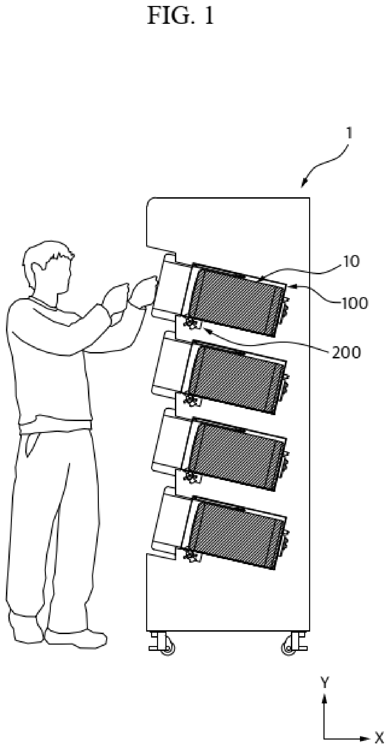

FIG. 1 is a view illustrating a battery charging device 1 according to an example embodiment of the present disclosure.

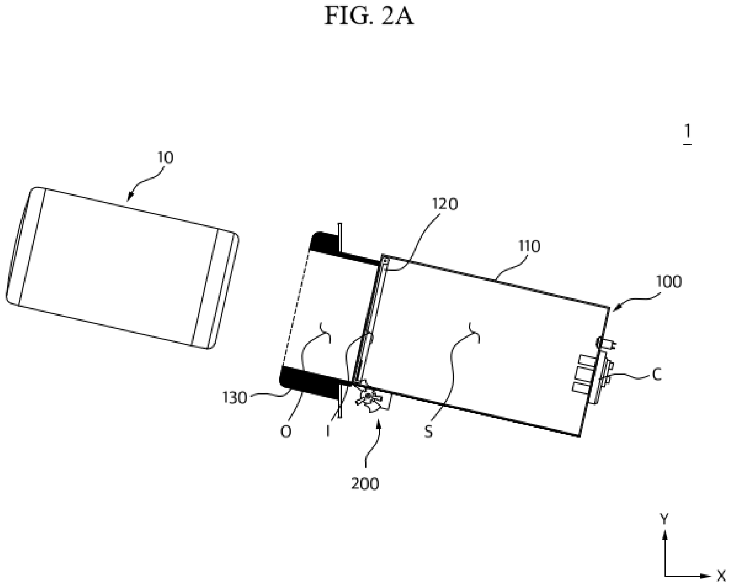

According to various example embodiments, the battery charging device 1 may include one or more accommodation spaces (for example, a slot S of FIG. 2A) into which a battery pack 10 may be inserted, and may charge the battery pack 10 that is inserted in a specific accommodation space.

For example, a user may receive the charging-completed battery pack 10 from the battery charging device 1 and, separately from this, may insert and return the previously used battery pack 10 into one accommodation space of the battery charging device 1. In some example embodiments, the battery charging device 1 may provide the charging-completed battery pack 10 only when the user returns the battery pack 10 normally.

The battery charging device 1 may operate to allow the charged battery pack 10 to be removed or the discharged battery pack 10 to be inserted depending on whether a predetermined condition is satisfied (for example, whether it is verified that the predetermined condition is satisfied through a predetermined user authentication procedure).

For example, when the accommodation space is empty, the battery charging device 1 may restrict opening of a door such that an opening end of the accommodation space is closed by the door (for example, a door 120 of FIG. 2A) and may lift opening restriction on the door based on whether the predetermined condition is satisfied.

For example, the battery charging device 1 may detect whether the battery pack 10 is normally inserted into the accommodation space and initiate charging of the inserted battery pack 10 based on whether the predetermined condition is satisfied.

For example, when the battery pack 10 is inserted into the accommodation space, the battery charging device 1 may restrict removal of the battery pack 10 or lift the restriction on the removal of the battery pack 10 depending on whether the predetermined condition is satisfied.

Referring to FIG. 1, the battery charging device 1 according to various example embodiments may include a case 100 and a locking member 200.

According to an example embodiment, the case 100 may include an accommodation space into which the battery pack 10 may be inserted.

For example, as illustrated in FIG. 1, the battery charging device 1 may include a plurality of accommodation spaces. In example embodiments, the battery charging device 1 may be formed to have a plurality of the cases 100 in an assembled form corresponding to each of the plurality of accommodation spaces or may be formed to include the plurality of accommodation spaces on the single case 100. For example, the battery charging device 1 may include four or eight accommodation spaces, and each accommodation space may function independently from one another.

According to an example embodiment, the locking member 200 may restrict arbitrary removal of the battery pack 10 inserted into the accommodation space of the case 100.

According to an example embodiment, the locking member 200 may guide a position of a door (for example, the door 120 of FIG. 2A) provided to at least partially close the accommodation space from which the battery pack 10 is removed, or restrict opening of the door.

In an example embodiment, the locking member 200 may be provided separately for each accommodation space, and each locking member 200 may operate independently from one another.

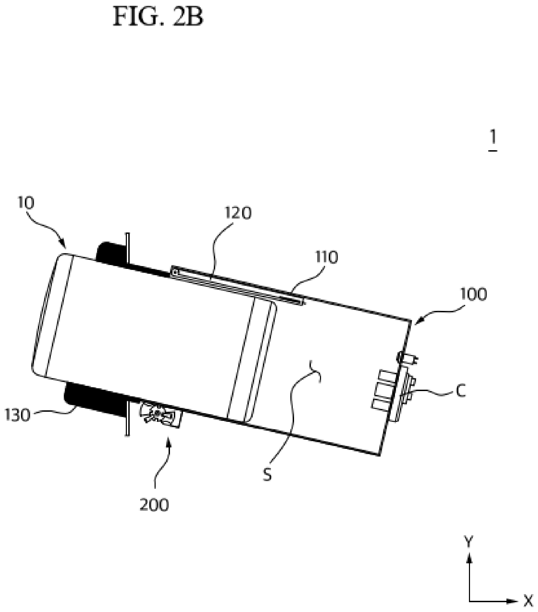

FIG. 2A and FIG. 2B are views illustrating a process in which the battery pack 10 is inserted into the battery charging device 1 according to an example embodiment of the present disclosure.

For example, FIG. 2A is a side view illustrating a state before the battery pack 10 is inserted into an accommodation space (for example, the slot S) of the battery charging device 1 according to an example embodiment of the present disclosure. For example, FIG. 2B is a side view illustrating a state in which the battery pack 10 is partially inserted into the accommodation space of the battery charging device 1 of FIG. 2A.

Referring to FIG. 2A and FIG. 2B, the battery charging device 1 according to various example embodiments may include the case 100 and the locking member 200.

According to various example embodiments, the battery charging device 1 (or the case 100 of the battery charging device 1) may include at least one of a frame 110 forming an outer surface, the slot S as the accommodation space into which the battery pack 10 may be inserted, and the door 120 configured to open or close the slot S at a side of an open end of the slot S.

In an example embodiment, the frame 110 may be configured to include an open end at a side of the slot S. For example, the open end may refer to an entrance I through which the battery pack 10 may be inserted into or removed from the slot .

Meanwhile, as illustrated in FIG. 2A and FIG. 2B, the battery charging device 1 according to an example embodiment (or the case 100 of the battery charging device 1) may further include an auxiliary frame 130 extending from the open end of the slot S and forming an opening O inside.

For example, the auxiliary frame 130 may be provided to be separately mounted on an outer side of the frame 110 to physically protect the slot S. For another example, the auxiliary frame 130 may be formed integrally with the frame 110.

For example, the opening O formed by the auxiliary frame 130 may perform a role of a passage during a process in which the battery pack 10 is inserted into the slot S.

For example, a sensing part (for example, a detection button part (not illustrated)) for detecting whether the battery pack 10 is inserted may be included inside the auxiliary frame 130.

Meanwhile, in the battery charging device 1 according to various example embodiments of the present disclosure, it may be possible to effectively detect whether the battery pack 10 is inserted by using a sensing method of the locking member 200 that will be described below even without the auxiliary frame 130 or without the sensing part (not illustrated) on the auxiliary frame 130.

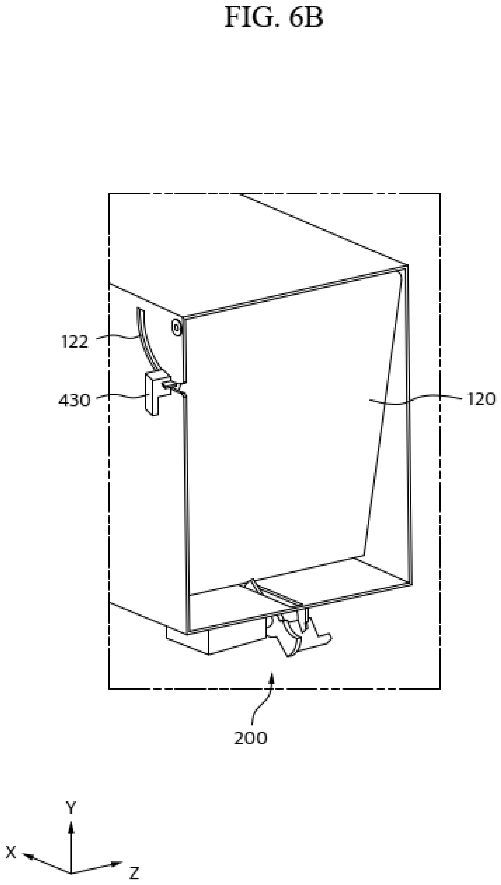

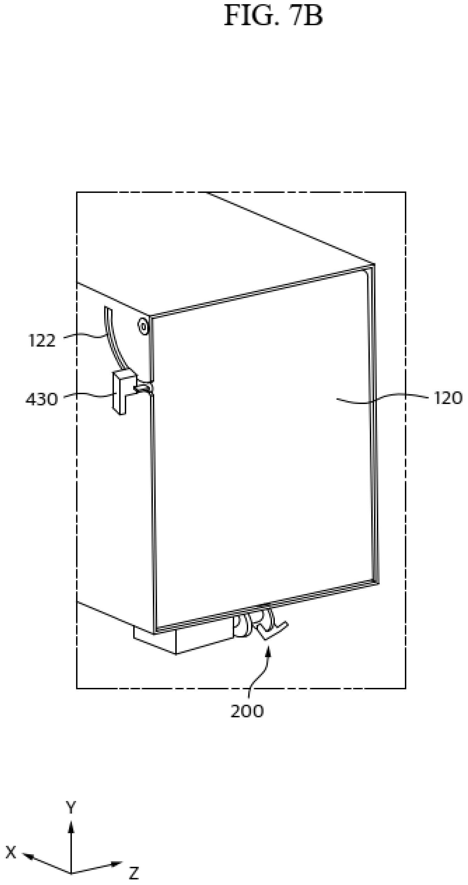

In an example embodiment, the frame 110 may have a structure corresponding to a shape of the battery pack 10. For example, the frame 110 may have a substantially rectangular parallelepiped box shape as illustrated in FIG. 6B and FIG. 7B. However, various example embodiments of the present disclosure are not limited to the rectangular parallelepiped box shape. A shape of the frame 110 may have various structures (for example, a cylindrical shape and a sheet shape) corresponding to various appearances and shapes of the battery pack 10.

In an example embodiment, the door 120 may be rotatably connected from a side of the open end of the slot S.

For example, the door 120 may have a shape and size corresponding to the entrance I, which is the open end of the slot S.

For example, the door 120 may be connected to the frame 110 from the side of the open end of the slot S. For example, the door 120 may be connected to a side of the frame 110 to be rotatable through a connection allowing relative rotation, such as a hinge.

According to an example embodiment, as illustrated in FIG. 2A and FIG. 2B, the door 120 may have an end rotatably connected to an upper end of the frame 110 corresponding to the entrance I. For example, before the battery pack 10 is inserted (for example, with reference to FIG. 2A), the other end of the door 120 that is not connected to the frame 110 may be positioned at a lower end of the frame 110 corresponding to the entrance I. For example, in a state in which the battery pack 10 is inserted into the slot S (for example, with reference to FIG. 2B), as the door 120 is pushed and raised by the battery pack 10, the other end of the door 120 may be positioned adjacent to an upper surface of the frame 110.

In an example embodiment, the door 120 may have a structure driven to be automatically opened or closed based on an electrical signal of a processor (not illustrated) provided in the battery charging device 1.

Conversely, in another example embodiment, the door 120 may be opened or closed only by an external force without separate driving control by the processor (not illustrated) to simplify components of the battery charging device 1 and reduce manufacturing costs. Meanwhile, even in this case, the battery charging device 1 according to various example embodiments of the present disclosure may provide a function of restricting opening of the door 120 or lifting the opening restriction on the door by using the locking member 200.

For example, as illustrated in FIG. 2A, the locking member 200 according to various example embodiments may operate and rotate to a position capable of restricting arbitrary opening of the door 120 when the slot S is empty. In addition, as illustrated in FIG. 2B, the locking member 200 may operate and rotate so as not to restrict the opening of the door 120 when it is necessary to insert the battery pack 10 into the slot S or remove the battery pack 10 from the slot S.

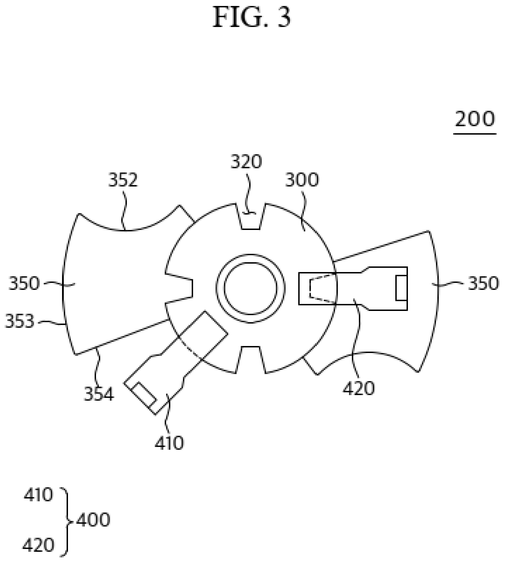

In an example embodiment, the locking member 200 may be disposed adjacent to the open end (for example, the entrance I) of the slot S. For example, the locking member 200 may include a circular plate (for example, a circular plate 300 of FIG. 3) disposed to be rotatable at an outer side of the slot S and at least one wing part (for example, a wing part 350 of FIG. 3) protruding from the circular plate in a radial direction of the circular plate. The wing part may be partially positioned inside the slot S based on a degree of rotation of the circular plate and may be overlapped with at least a partial area of the slot S. As such, when a partial member of the locking member 200 is positioned inside the slot S, this may be overlapped with a movement path of the door 120 or the battery pack 10 such that a movement (that is, opening of the door 120 or insertion or removal of the battery pack 10) of the door 120 or the battery pack 10 may be restricted. In addition, when every component of the locking member 200 is positioned outside the slot S so as not to be overlapped with at least partial area of the slot S, since the locking member 200 is not overlapped with the movement path of the door 120 or the battery pack 10, the movement of the door 120 or the battery pack 10 may not be restricted by the locking member 200.

In addition, although it is not illustrated, for positioning the wing part inside the slot S or outside the slot depending on the degree of the rotation of the circular plate of the locking member 200, the frame 110 of the case 100 may have an opening (not illustrated) in a partial area corresponding to a rotation radius of the wing part of the locking member 200.

Meanwhile, the battery charging device 1 may further include a charging terminal C provided to correspond to each slot S. For example, the charging terminal C may be electrically connected to the battery pack 10 inserted into the slot S to supply power to charge the battery pack 10 or transmit and receive an electrical signal to and from the battery pack 10.

For example, the charging terminal C may have a structure partially protruding toward an inner side of the slot S to come into contact with the battery pack 10 inserted into the slot S.

FIG. 3 is a cross-sectional view for describing a structure of a locking member 200 according to an example embodiment of the present disclosure.

Referring to FIG. 3, the locking member 200 according to various example embodiments may include the circular plate 300 and the at least one wing part 350.

In an example embodiment, the circular plate 300 may include one or more grooves 320. For example, each of the grooves 320 of the circular plate 300 may be positioned to be spaced at a certain interval apart from one another. For example, as illustrated in FIG. 3, when the four grooves 320 are provided in the circular plate 300, each of the grooves 320 may be disposed at an interval of about 90 degrees based on a center of the circular plate.

In an example embodiment, the at least one wing part 350 may be formed to protrude from the circular plate 300. For example, the wing part 350 may be provided as a plurality of wing parts.

According to an example embodiment, each wing part 350 may include a curved first surface 352 having an inwardly recessed (or indented) shape and a second surface 354 having a substantially straight-line shape.

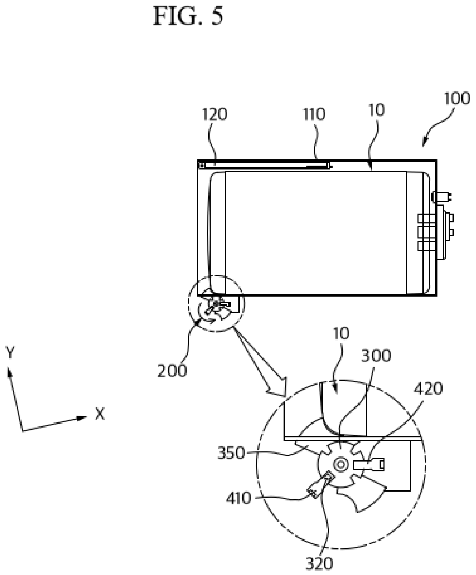

For example, the first surface 352 may include a curved surface corresponding to an appearance (for example, an edge of the battery pack 10) of the battery pack 10. As such, when the first surface 352 includes the curved surface corresponding to the appearance of the battery pack 10, by stably coming into contact with a portion of an outer surface of the battery pack 10 inserted into the slot S (for example, with reference to FIG. 5), it is possible to minimize damage to the battery pack 10 or the locking member 200 even when there is an attempt to forcibly remove the battery pack 10 from the outside.

For example, the second surface 354 may have a length and shape appropriate to guide a position of the door 120 such that the door 120 is able to close the slot S at a position corresponding to the entrance I (for example, with reference to 6A).

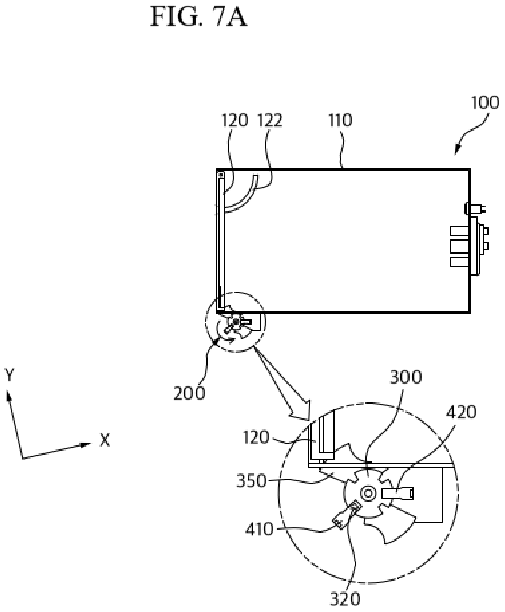

In an example embodiment, the wing part 350 may further include a third surface 353 connecting the first surface 352 and the second surface 354. The third surface 353 may have a length and shape (for example, with reference to FIG. 7A) that may be overlapped with a rotation radius of the door 120 to restrict arbitrary opening of the door 120 when the door 120 is positioned to close the slot S (for example, the entrance I of the slot S).

Meanwhile, the locking member 200 according to various example embodiments may further include at least one sensor 400 (for example, a first sensor 410 and a second sensor 420) positioned to be partially overlapped with the circular plate 300 on an axis (for example, a Z-axis of FIG. 6B).

For example, at least a portion of the at least one sensor 400 may be overlapped or not be overlapped with the groove 320 of the circular plate 300 depending on the degree of the rotation of the circular plate 300.

For example, the at least one sensor 400 may include an optical sensor that detects information on light projected or reflected from a point.

For example, the at least one sensor 400 in the locking member 200 according to various example embodiments of the present disclosure may detect whether each sensor 400 is overlapped with the specific groove 320 of the circular plate 300 on an axis (for example, the Z-axis of FIG. 6B) based on the degree of the rotation of the circular plate 300. Through this, the at least one sensor 400 may acquire information on whether the battery pack 10 is accommodated in the slot S or whether the opening of the door 120 is restricted.

Meanwhile, although it is not illustrated, the battery charging device 1 according to various example embodiments may further include an actuator (not illustrated) that drives and rotates the locking member 200 (for example, the circular plate 300 and the wing part 350 of the locking member 300).

In addition, the battery charging device 1 in an example embodiment may further include a processor (not illustrated) that controls operations of the actuator (not illustrated) or at least a portion of the at least one sensor 400.

For example, the processor (not illustrated) may be electrically connected to the actuator (not illustrated) and the at least one sensor 400 to transmit and receive an electrical signal (for example, a control signal).

For example, the processor (not illustrated) may acquire, by using the at least one sensor 400, position (or state) information of the locking member 200, position information of the door 120, or information on whether the battery pack 10 is inserted.

For example, the processor (not illustrated) may acquire, by using the at least one sensor 400, information on whether the door 120 is opened or closed and/or acquire information on whether the battery pack 10 is inserted into or removed from the slot S. In addition, the processor (not illustrated) may control a rotation position of the locking member 200 by using the actuator based on sensing information (or user input information).

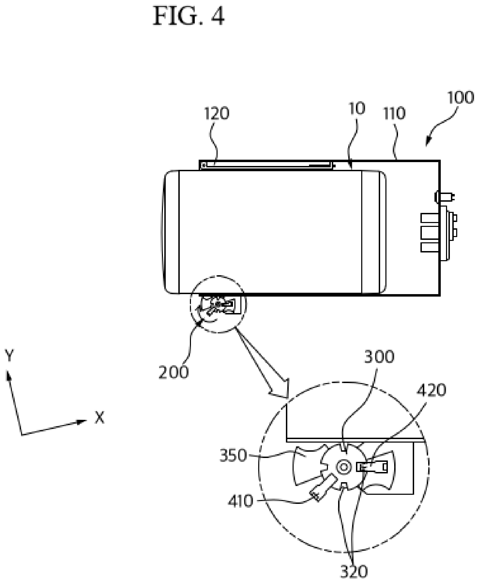

Referring to FIGS. 4, 5, 6A, 6B, 7A, and 7B, an operation state of the battery charging device 1 according to a rotation position of the locking member 200 will be described in detail hereinafter.

FIG. 4 is a view illustrating a state in which the battery pack 10 is inserted into the battery charging device 1 (for example, an accommodation space of the battery charging device 1) according to an example embodiment of the present disclosure.

Referring to FIG. 4, in the battery charging device 1 according to various example embodiments, the locking member 200 may operate to allow every component (for example, the circular plate 300 and the at least one wing part 350) of the locking member 200 to be positioned outside the accommodation space such that the battery pack 10 is inserted (or removed from the accommodation space) into the accommodation space (for example, a slot) formed inside the case 100 by the frame 110.

In this case, opening restriction on the door 120 may be lifted, and the door 120 may be pushed and raised by the battery pack 10 when the battery pack 10 is inserted.

Meanwhile, in this case, among sensors provided in the locking member 200, the first sensor 410 may detect information (for example, a dark state) indicating not overlapping with the grooves 320 of the circular plate 300 on an axis (for example, the Z-axis), and the second sensor 420 may detect information (for example, a light state) indicating overlapping with the specific groove 320 on the axis.

For example, the processor (not illustrated) of the battery charging device 1 may determine that the battery pack 10 is in a state capable of being inserted or removed when sensing information related to the dark state is acquired from the first sensor 410 and sensing information related to the light state is acquired from the second sensor 420.

For example, the processor (not illustrated) may drive, by using the actuator (not illustrated), the locking member 200 to be in a state as illustrated in FIG. 4 based on whether a predetermined condition is satisfied (for example, whether user authentication is satisfied) and then may identify whether the locking member 200 is normally at a required position according to an operation command through the sensing information acquired by the first sensor 410 and the second sensor 420. For example, when receiving sensing information that does not correspond to a control command, the processor (not illustrated) may output related notification information through a separate output device (for example, a display (not illustrated) included in a user terminal or the battery charging device 1).

FIG. 5 is a view illustrating a state in which the battery pack 10 is completely inserted into the battery charging device 1 (for example, an accommodation space of the battery charging device 1) according to an example embodiment of the present disclosure.

Referring to FIG. 5, when it is determined that the battery pack 10 is completely normally inserted into the accommodation space (for example, the slot S), the battery charging device 1 according to various example embodiments may operate the locking member 200 such that removal of the inserted battery pack 10 is restricted.

As an example, the battery charging device 1 may include a separate additional sensor (for example, a third sensor 430 of FIG. 6B) other than the first sensor 410 and the second sensor 420 and may confirm, by using the additional sensor, that the battery pack 10 is inserted into the accommodation space.

As another example, by using the charging terminal C other than the first sensor 410 and the second sensor 420, the battery charging device 1 may identify that the battery pack 10 comes into contact with the charging terminal C and may confirm, based on the identification information, that the battery pack 10 is completely inserted into the accommodation space.

Meanwhile, the battery charging device 1 (for example, the processor (not illustrated) of the battery charging device 1) may position the locking member 200 to restrict removal of the battery pack 10 and then identify a normal operation based on the sensing information.

For example, when the locking member 200 is positioned to restrict the removal of the battery pack 10, the first sensor 410 may detect information (for example, the light state) indicating overlapping with the specific groove 320 of the circular plate 300 on an axis (for example, the Z-axis), and the second sensor 420 may detect information (for example, dark state) indicating not overlapping with the groove 320 on the axis.

In addition, for example, when the battery charging device 1 is additionally provided with the third sensor 430 as illustrated in FIG. 6B, the third sensor 430 may detect information (for example, the dark state) indicating overlapping with the battery pack 10 inserted into the accommodation space on an axis (for example, the Z-axis) or the door 120 in an area of the accommodation space.

For example, when the processor (not illustrated) acquires the sensing information related to the light state from the first sensor 410, acquires the sensing information related to the dark state from the second sensor 420, and acquires the sensing information related to the dark state from the third sensor 430 (or acquires connection recognition information with the battery pack 10 from the charging terminal C), it may be determined that the battery pack 10 is inserted and that the removal (or withdrawal) of the battery pack 10 is restricted.

Meanwhile, in an example embodiment, the processor (not illustrated) may control charging of the battery pack 10 to start only when it is confirmed, as described above, that the battery pack 10 is normally inserted into the accommodation space and that the removal of the battery pack 10 is restricted.

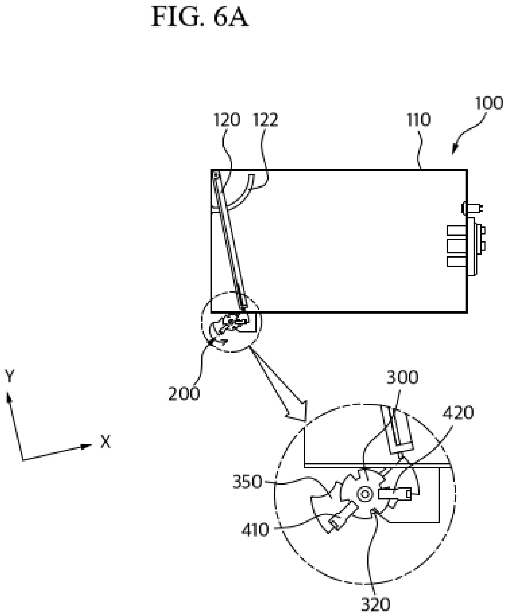

FIG. 6A is a side view illustrating a state in which the battery pack 10 is removed from the battery charging device 1 (for example, an accommodation space of the battery charging device 1) according to an example embodiment of the present disclosure. FIG. 6B is a schematic perspective view partially illustrating the battery charging device 1 of FIG. 6A.

Referring to FIG. 6A and FIG. 6B, the battery charging device 1 according to various example embodiments may move the door 120 to a predetermined position by using the locking member 200 after the battery pack 10 is removed from the accommodation space (for example, a slot).

For example, when it is necessary to remove the battery pack 10, the battery charging device 1 may operate the locking member 200 to be back to a state of the locking member 200 described with reference to FIG. 4 (that is, a state in which the wing part 350 is positioned outside the accommodation space such that the restriction on removal of the battery pack 10 is lifted) from a state of the locking member 200 described with reference to FIG. 5 (that is, a state in which the removal of the battery pack 10 is restricted).

For example, the battery charging device 1 may operate the circular plate 300 (and the wing part 350 connected to the circular plate 300) of the locking member 200 to rotate in a specific direction (for example, a counterclockwise direction based on FIG. 5).

Meanwhile, after the battery pack 10 is removed from the accommodation space, the door 120 is not pushed and raised by the battery pack 10 such that its position may be moved to a state illustrated in FIG. 6A.

For example, in an example embodiment, the battery charging device 1 may be configured such that the case 100 has a predetermined inclination from a bottom surface (for example, the ground) for convenience of users when the battery pack 10 is inserted and removed (with reference to FIG. 1). Accordingly, the door 120 may be subjected to a force in the direction of gravity (for example, a -Y-axial direction), not a direction perpendicular to the frame 110, to be positioned in the direction of gravity and thus be in a state in which the accommodation space is not completely closed.

Here, in an example embodiment, the battery charging device 1 may move the door 120 to a predetermined position by using the locking member 200 after the battery pack 10 is removed from the accommodation space (for example, a slot). For example, the locking member 200 may rotate in a direction (for example, a counterclockwise direction of FIG. 6A) from a state illustrated in FIG. 6A and then move the door 120 to a side end of the accommodation space (for example, the entrance I of FIG. 2) as illustrated in FIG. 7A.

In an example embodiment, in the state illustrated in FIG. 6A and FIG. 6B, the battery charging device 1 (for example, the processor (not illustrated) of the battery charging device 1) may acquire information (for example, the dark state information) from the first sensor 410 and the second sensor 420, indicating that each sensor (the first sensor 410 and the second sensor 420) is not overlapped with the groove 320 of the circular plate 300 on an axis (the Z-axis).

Meanwhile, according to an example embodiment, as illustrated in FIG. 6A and FIG. 6B, a guide groove 122 may be provided in a surface of the frame 110 of the case 100 for guiding a movement path (or a movement direction) when the door 120 operates to be opened or closed. In addition, in an example embodiment, a protrusion part formed to be engaged to correspond to the guide groove 122 may be further included at a side of the door 120. In addition, in an example embodiment, when the third sensor 430 is provided, as illustrated in FIG. 6B, the third sensor 430 may be disposed at a position corresponding to the guide groove 122 to identify whether the battery pack 10 (or the door 120) is overlapped within the accommodation space. For example, as illustrated in FIG. 6A and FIG. 6B, the third sensor 430 may be disposed to correspond to a point, among positions corresponding to the guide groove 122, positioned as the door 120 is subjected to a force in the direction of gravity in the accommodation space inside the case 100 having the predetermined inclination from the bottom surface. In this case, when the battery pack 10 is removed from the accommodation space, the third sensor 430 may provide information on whether the door 120 is positioned as illustrated in FIG. 6A.

FIG. 7A is a side view illustrating a state in which door opening is restricted after the battery pack 10 is removed from the battery charging device 1 (for example, an accommodation space of the battery charging device 1) according to an example embodiment of the present disclosure. FIG. 7B is a schematic perspective view partially illustrating the battery charging device 1 of FIG. 7A.

Referring to FIG. 7A and FIG. 7B, the battery charging device 1 according to various example embodiments may move the door 120 to a closing position of a side end of the accommodation space and then control a position of the locking member 200 such that the door 120 maintains the position.

In addition, in an example embodiment, after operating the locking member 200 to be positioned as illustrated in FIG. 7A and FIG. 7B, the battery charging device 1 (for example, a processor (not illustrated) of the battery charging device 1) may acquire information (for example, light state information) from the first sensor 410, indicating that the first sensor 410 is overlapped with the specific groove 320 of the circular plate 300 on an axis (for example, the Z-axis) and may acquire information (for example, dark state information) from the second sensor 420, indicating that the second sensor 420 is not overlapped with the groove 320 of the circular plate 300 on the axis. Accordingly, it may be confirmed that the locking member 200 is normally operated.

As described above, although the present disclosure is described based on example embodiments with reference to the accompanying drawings, it is apparent to those skilled in the art that various modifications are possible without departing from the scope of the present disclosure. Accordingly, the scope of the present disclosure should be interpreted by the claims described to include examples of such numerous modifications.

## Claims

1. A battery charging device comprising:
a case including an accommodation space, the accommodation space being configured to allow a battery pack to be inserted therein, the accommodation space having an open end;
a door configured to be rotatably connected to a side of the open end of the accommodation space to open or close the accommodation space; and
a locking member located adjacent to the open end of the accommodation space, the locking member being configured to maintain the door in a closed state or restrict removal of the battery pack that is inserted into the accommodation space based on a degree of rotation of the locking member.

2. The battery charging device of claim 1, further comprising:
a processor;
at least one sensor configured to be electrically connected to the processor, the at least one sensor being configured to detect information on at least one of the locking member or the door; and
an actuator configured to drive the locking member to rotate.

3. The battery charging device of claim 2, wherein the processor is configured to acquire, by using the at least one sensor, sensing information on whether the door is opened or closed and whether the battery pack is inserted or removed and to control rotation of the locking member by the actuator based on at least a portion of the sensing information and user input information.

4. The battery charging device of claim 3, wherein the at least one sensor includes an optical sensor, and
wherein the processor is configured to determine, based on the sensing information, whether to charge the battery pack that is inserted into the accommodation space.

5. The battery charging device of claim 1, wherein the locking member comprises:
a circular plate rotatably located at an outer side of the accommodation space; and
at least one wing part protruding from the circular plate in a radial direction of the circular plate, and
wherein the at least one wing part may be at least partially located at an inner side of the accommodation space when the circular plate rotates.

6. The battery charging device of claim 5, wherein the at least one wing part is configured to push, based on a degree of rotation of the circular plate, the door from the inner side to the outer side of the accommodation space.

7. The battery charging device of claim 5, wherein the at least one wing part is configured to restrict, based on the degree of the rotation of the circular plate, rotation of the door such that the door maintains the closed state.

8. The battery charging device of claim 5, wherein the at least one wing part is configured to block a removal path of the battery pack to restrict the removal of the battery pack that is accommodated in the accommodation space.

9. The battery charging device of claim 5, wherein the at least one wing part includes a curved surface corresponding to a shape of the battery pack.

10. The battery charging device of claim 1, wherein the door is configured to rotate by the battery pack when the battery pack is inserted and is positioned at an upper surface of the case.

11. The battery charging device of claim 1, wherein the case further includes
a guide groove for guiding a moving direction of the door,
wherein the door includes a protrusion part configured to be inserted into the guide groove, and
wherein a sensor configured to detect position information of the battery pack or the door is located in the guide groove.

12. The battery charging device of claim 5, wherein the circular plate includes a plurality of grooves spaced apart from one another.

13. The battery charging device of claim 12, further comprising at least one sensor configured to detect sensing information on at least one of the locking member or the door,
wherein the at least one sensor is configured to detect the sensing information based on a position relationship with the plurality of grooves.

14. The battery charging device of claim 3, wherein the processor is configured to identify whether the locking member malfunctions based on the sensing information and provide notification information when it is determined that the locking member malfunctions.
